(19) **Europäisches Patentamt / European Patent Office / Office européen des brevets**

(11) **EP 4 096 936 B1**

(12) **FASCICULE DE BREVET EUROPEEN**

| | |
|---|---|
| (45) Date de publication et mention de la délivrance du brevet: **27.12.2023 Bulletin 2023/52** | (51) Classification Internationale des Brevets (IPC): **B60C 9/00** *(2006.01)* **B60C 9/20** *(2006.01)* |
| (21) Numéro de dépôt: **21705585.4** | (52) Classification Coopérative des Brevets (CPC): **B60C 9/0007; B60C 9/2006;** B60C 2009/2093; B60C 2009/2096; B60C 2200/06; B60C 2200/065; B60C 2200/08 |
| (22) Date de dépôt: **19.01.2021** | (86) Numéro de dépôt international: **PCT/FR2021/050091** |
| | (87) Numéro de publication internationale: **WO 2021/152231 (05.08.2021 Gazette 2021/31)** |

(54) **ARCHITECTURE OPTIMISÉE DE PNEUMATIQUE DE TYPE POIDS-LOURD, AGRICOLE OU GÉNIE CIVIL**

OPTIMIERTE ARCHITEKTUR VON SCHWERLASTREIFEN FÜR DIE LANDWIRTSCHAFT ODER DEN TIEFBAU

OPTIMIZED ARCHITECTURE OF HEAVY-DUTY TIRES OF THE AGRICULTURAL OR CIVIL ENGINEERING TYPE

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **29.01.2020 FR 2000851**

(43) Date de publication de la demande:
**07.12.2022 Bulletin 2022/49**

(73) Titulaire: **COMPAGNIE GENERALE DES ETABLISSEMENTS MICHELIN**
**63000 Clermont-Ferrand (FR)**

(72) Inventeurs:
• **GUERBERT-JUBERT, Jean-Luc**
**63040 CLERMONT-FERRAND Cedex 9 (FR)**
• **BARBARIN, François**
**63040 CLERMONT-FERRAND Cedex 9 (FR)**
• **PATAUT, Gaël**
**63040 CLERMONT-FERRAND Cedex 9 (FR)**
• **REIX, Olivier**
**63040 CLERMONT-FERRAND Cedex 9 (FR)**
• **LAUBY, Lucas**
**63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
EP-A1- 2 168 787          WO-A1-2016/131862
WO-A1-2019/058053        FR-A1- 3 020 016

## Description

La présente invention a pour objet un pneumatique radial, destiné à équiper un véhicule lourd de type génie civil, agricole ou de transport de marchandise, et concerne plus particulièrement l'armature de sommet d'un tel pneumatique, et encore plus particulièrement son armature de protection.

Un pneumatique pour véhicule lourd de type génie civil est décrit dans le document WO 2019/058053 A.

Les pneumatiques radiaux destinés à équiper un véhicule lourd de type génie civil, agricole ou de transport de marchandise sont désignés au sens de la norme de la European Tyre and Rim Technical Organisation ou ETRTO.

Par exemple un pneumatique radial pour véhicule lourd de type génie civil, au sens de la norme de la European Tyre and Rim Technical Organisation ou ETRTO, est destiné à être monté sur une jante dont le diamètre est au moins égal à 25 pouces. Bien que non limitée à ce type d'application, l'invention est décrite pour un pneumatique radial de grande dimension destiné à être monté sur un dumper, notamment des véhicules de transport de matériaux extraits de carrières ou de mines de surface, par l'intermédiaire d'une jante dont le diamètre est au moins égal à 35 pouces et peut atteindre 57 pouces, voire 63 pouces.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. La direction circonférentielle est tangente à la circonférence du pneumatique.

Dans ce qui suit, les expressions «radialement intérieur», respectivement «radialement extérieur» signifient «plus proche », respectivement «plus éloigné de l'axe de rotation du pneumatique». Par «axialement intérieur», respectivement «axialement extérieur», on entend «plus proche», respectivement «plus éloigné du plan équatorial du pneumatique», le plan équatorial du pneumatique étant le plan passant par le milieu de la surface de roulement et perpendiculaire à l'axe de rotation.

De façon générale un pneumatique comprend une bande de roulement, destinée à venir en contact avec un sol par l'intermédiaire d'une surface de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de carcasse d'un pneumatique radial pour véhicule lourd de type génie civil, agricole ou de transport de marchandise, comprend habituellement au moins une couche de carcasse comprenant des renforts généralement métalliques, enrobés par un matériau polymérique de type élastomère ou élastomérique, obtenu par mélangeage et appelé mélange d'enrobage. Une couche de carcasse comprend une partie principale, reliant les deux bourrelets entre eux et s'enroulant généralement, dans chaque bourrelet, de l'intérieur vers l'extérieur du pneumatique autour d'un élément de renforcement circonférentiel le plus souvent métallique appelé tringle, pour former un retournement. Les renforts métalliques d'une couche de carcasse sont sensiblement parallèles entre eux et forment, avec la direction circonférentielle, un angle compris entre 85° et 95°.

L'armature de sommet d'un pneumatique radial pour véhicule de type génie civil, agricole ou de transport de marchandise, comprend une superposition de couches de sommet s'étendant circonférentiellement, radialement à l'extérieur de l'armature de carcasse. Chaque couche de sommet est constituée de renforts généralement métalliques, parallèles entre eux et enrobés par un matériau polymérique de type élastomère ou mélange d'enrobage.

Parmi les couches de sommet, on distingue usuellement les couches de protection, constitutives de l'armature de protection et radialement les plus à l'extérieur, et les couches de travail, constitutives de l'armature de travail et radialement comprises entre l'armature de protection et l'armature de carcasse.

L'armature de protection, comprenant au moins une couche de protection, protège essentiellement les couches de travail des agressions mécaniques ou physico-chimiques, susceptibles de se propager à travers la bande de roulement radialement vers l'intérieur du pneumatique.

L'armature de protection comprend souvent deux couches de protection, radialement superposées, formées de renforts métalliques élastiques, parallèles entre eux dans chaque couche et croisés d'une couche à la suivante, en formant, avec la direction circonférentielle, des angles au moins égaux à 10°.

L'armature de travail, comprenant au moins deux couches de travail, a pour fonction de ceinturer le pneumatique et de lui conférer de la rigidité et de la tenue de route. Elle reprend à la fois des sollicitations mécaniques de gonflage, générées par la pression de gonflage du pneumatique et transmises par l'armature de carcasse, et des sollicitations mécaniques de roulage, générées par le roulage du pneumatique sur un sol et transmises par la bande roulement. Elle doit en outre résister à l'oxydation et aux chocs et perforations, grâce à sa conception intrinsèque et à celle de l'armature de protection.

L'armature de travail comprend usuellement deux couches de travail, radialement superposées, formées de renforts métalliques non extensibles, parallèles entre eux dans chaque couche et croisés d'une couche à la suivante, en formant, avec la direction circonférentielle, des angles au plus égaux à 60°, et, de préférence, au moins égaux à 15° et au plus égaux à 45°.

Pour diminuer les sollicitations mécaniques de gonflage transmises à l'armature de travail, il est connu de disposer, radialement à l'extérieur de l'armature de carcasse, une armature de frettage. L'armature de frettage, dont la fonction est de reprendre au moins en partie les sollicitations mécaniques de gonflage, améliore l'endurance de l'armature de sommet par une rigidification de l'armature de sommet. L'armature de frettage peut être positionnée radialement à l'intérieur de l'armature de travail, entre les deux couches de travail de l'armature de travail, ou radialement à l'extérieur de l'armature de travail.

Dans les applications de type génie Civil, l'armature de frettage peut comprendre deux couches de frettage, radialement superposées, formées de renforts métalliques, parallèles entre eux dans chaque couche et croisés d'une couche à la suivante, en formant, avec la direction circonférentielle, des angles au plus égaux à 10°.

Dans les applications de type poids-lourd pour transport de charge, l'armature de frettage comprend usuellement une couche de frettage réalisée par l'enroulement circonférentiel d'un fil de frettage ou d'une bande de frettage continue en formant, avec la direction circonférentielle, des angles au plus égaux à 5°.

En ce qui concerne les renforts métalliques, un renfort métallique est caractérisé mécaniquement par une courbe représentant la force de traction (en N), appliquée au renfort métallique, en fonction de son allongement relatif (en %), dite courbe force-allongement. De cette courbe force-allongement sont déduites des caractéristiques mécaniques en traction du renfort métallique, telles que l'allongement structural As (en %), l'allongement total à la rupture At (en %), la force à la rupture Fm (charge maximale en N) et la résistance à la rupture Rm (en MPa), ces caractéristiques étant mesurées selon la norme ASTM D 2969-04 de 2014.

L'allongement total At du renfort métallique est, par définition, la somme de ses allongements structural, élastique et plastique (At = As + Ae + Ap) et particulièrement à la rupture où chacun des allongements est non nul. L'allongement structural As résulte du positionnement relatif des fils métalliques constitutifs du renfort métallique sous un faible effort de traction. L'allongement élastique Ae résulte de l'élasticité même du métal des fils métalliques, constituant le renfort métallique, pris individuellement, le comportement du métal suivant une loi de Hooke. L'allongement plastique Ap résulte de la plasticité, c'est-à-dire de la déformation irréversible, au-delà de la limite d'élasticité, du métal de ces fils métalliques pris individuellement. Ces différents allongements ainsi que leurs significations respectives, bien connus de l'homme du métier, sont décrits, par exemple, dans les documents US5843583, WO2005/014925 et WO2007/090603.

On définit également, en tout point de la courbe force-allongement d'un renfort métallique, un module en extension, exprimé en GPa, qui représente la pente de la droite tangente à la courbe force-allongement en ce point. En particulier, on appelle module élastique en extension ou module d'Young, le module en extension de la partie linéaire élastique de la courbe force-allongement.

Parmi les renforts métalliques, on distingue usuellement les renforts métalliques élastiques, tels que ceux utilisés dans les couches de protection, et les renforts métalliques non extensibles ou inextensibles, tels que ceux utilisés dans les couches de travail.

Un renfort métallique élastique, dans son état non gommé, est caractérisé par un allongement structural As au moins égal à 1% et un allongement total à rupture At au moins égal à 4%. En outre, un renfort métallique élastique a un module élastique en extension au plus égal à 180 GPa, et compris usuellement entre 40 GPa et 150 GPa.

Par exemple, on connait de l'état de la technique un câble métallique comprenant une unique couche de N=5 éléments filaires métalliques enroulés en hélice. Chaque élément filaire métallique est constitué d'un monofilament en acier et présente un diamètre égal à 0,38 mm. Chaque élément filaire métallique est enroulé à un pas P, ici P=6,7 mm et est, préalablement à l'étape d'assemblage final en hélice des éléments filaires métalliques, individuellement préformé. Les éléments filaires métalliques définissent une voûte interne du câble, permettant de définir un diamètre de voûte Dv. La préformation et la voûte interne procurent au câble, une fois assemblé, une aération relativement importante, autrement dit, un espace entre chaque paire d'éléments filaires métalliques adjacents relativement grand. Une telle aération engendre un allongement structural As du câble égal à 2,3 %. Un tel câble est notamment destiné à être utilisé dans des pneumatiques, par exemple des pneumatiques pour véhicule de type poids-lourds.

Un renfort métallique non extensible est caractérisé par un allongement total At, sous une force de traction égale à 10% de la force à rupture Fm, au plus égal à 0.2%. Par ailleurs, un renfort métallique non extensible a un module élastique en extension compris usuellement entre 150 GPa et 200 GPa.

Lors du roulage du pneumatique sur des pierres ou d'autres objets plus ou moins tranchants présents sur les pistes sur lesquelles circulent les dumpers, ou les zones d'approche chantier ou les parkings non bitumés sur lesquels circulent fréquemment les poids-lourd, le sommet d'un pneumatique est fréquemment soumis à des coupures susceptibles de le traverser radialement vers l'intérieur et selon la taille de l'objet, de perforer l'ensemble de l'armature de sommet et de carcasse créant une perte de pression et la défaillance du pneumatique. L'utilisation de renfort métallique élastique dans les couches de protection est connue pour améliorer la résistance des pneumatiques à la perforation WO2019/058053, néanmoins étant donné le coût de ces pneumatiques de grande dimension et la fréquence de ces incidents, il est toujours utile d'améliorer la performance. Cette amélioration a d'autant plus d'intérêt si elle se fait en diminuant la masse de l'armature de sommet et donc du pneumatique pour une préservation des ressources naturelles. Le document EP1520069 propose une solution sur la base d'un câble hybride textile et métal dans lequel une couche interne est un filé à base d'une multitude de filaments élémentaires tordus ensemble.

Les inventeurs se sont donnés pour objectif, pour un pneumatique radial pour véhicule de type génie civil, poids-lourd ou agricole, de diminuer le risque de perforation du pneumatique à la suite d'agressions de la bande de roulement lors d'un roulage sur des pierres tranchantes, tout en baissant la masse de l'armature de sommet.

Cet objectif a été atteint, selon l'invention, par un pneumatique pour véhicule de type poids-lourd, génie civil ou agricole comprenant

- une armature de sommet, radialement intérieure à une bande de roulement et radialement extérieure à une armature de carcasse,
- l'armature de sommet comprenant, radialement de l'extérieur vers l'intérieur, une armature de protection et une armature de travail,
- l'armature de protection comprenant au moins une couche de protection comprenant des renforts métalliques hyperélastiques, enrobés dans un matériau élastomérique, parallèles entre eux et formant, avec une direction circonférentielle (XX') tangente à la circonférence du pneumatique, un angle au moins égal à 10°, chaque renfort métallique hyperélastique comprenant au moins un câble, dits hyperélastique,
- les dits câbles hyperélastiques comprenant une unique couche constituée de N éléments filaires métalliques enroulés en hélice et présentant un diamètre externe D, chaque élément filaire métallique de la couche décrivant, lorsque le câble s'étend selon une direction sensiblement rectiligne, une trajectoire en forme d'hélice autour d'un axe principal (A) sensiblement parallèle à la direction sensiblement rectiligne, de sorte que, dans un plan de coupe sensiblement perpendiculaire à l'axe principal (A), la distance entre le centre de chaque élément filaire métallique de la couche et l'axe principal (A) est égale à la moitié du diamètre d'hélice Dh et est sensiblement constante et égale pour tous les éléments filaires métalliques de la couche, les éléments filaires métalliques définissant une voûte interne (58) du câble de diamètre Dv, chaque élément filaire métallique présentant un diamètre Df et un rayon de courbure d'hélice Rf défini par Rf=P/($\pi \times$ Sin(2$\alpha$)) avec P le pas de chaque élément filaire métallique exprimé en millimètres et $\alpha$ l'angle d'hélice de chaque élément filaire métallique, caractérisé en ce que, Dh, D, Dv, Df et Rf étant exprimés en millimètres :

- $$9 \leq Rf / Df \leq 30,$$

et

- $$1,30 \leq Dv / Df \leq 4.5.$$

- lesdits câbles hyperélastiques étant noyés dans un composé caoutchouteux.

De manière étonnante, les inventeurs, ont diminué le risque de perforation du sommet sans dégrader les autres performances, en utilisant comme renfort métallique soit directement un câble hyperélastique ou un multi-toron de câbles hyperélastiques, les dits câbles hyperélastiques ayant des caractéristiques géométriques particulières. Le diamètre de voûte Dv doit être suffisamment grand par rapport au diamètre des éléments filaires métalliques Df pour permettre une déformation en compression transverse améliorant la résistance à la perforation et suffisamment faible pour définir l'épaisseur de la couche de protection compatible avec des objectifs de limitation de la masse des pneumatiques et donc des ressources en matériaux nécessaires à leur réalisation. De même le rayon de courbure d'hélice Rf doit être suffisamment petit par rapport au diamètre des éléments filaires métalliques Df pour donner un allongement structurel important et suffisamment grand pour obtenir une résistance à la rupture linéique de la couche de protection adéquate.

De tels câbles ont l'avantage sur les câbles classiques élastiques hybrides ou non d'avoir non seulement une grande élasticité en traction mais aussi en compression transverse. Quand un indenteur exerce une pression sur un câble classique, celui-ci étant moins déformable en compression transverse, les câbles conservent une géométrie sensiblement cylindrique. La forme cylindrique amène que la force de l'indenteur s'exerce sur une surface étroite du câble et matériellement sur un élément filaire métallique. Avec les câbles proposés dans l'invention, la partie centrale du câble situé dans la limite du diamètre de voûte Dv étant un composé caoutchouteux, matériau élastique déformable même comparativement à la fibre textile centrale des câbles hybrides, le câble se déforme jusqu'à prendre une forme écrasée parallélépipédique offrant une plus grande surface de contact à l'indenteur et ainsi au même moment plusieurs éléments filaires métalliques. Cette augmentation du nombre d'éléments filaires au contact simultanément de l'indenteur diminue les contraintes s'appliquant sur chacun des éléments filaires et augmente donc la résistance de la nappe à la pénétration et ainsi celle du pneumatique.

Les valeurs des caractéristiques Df, Dv et Rf ainsi que des autres caractéristiques décrites ci-dessous sont mesurées sur ou déterminées à partir des câbles soit directement après fabrication, c'est-à-dire avant toute étape de noyage dans une matrice élastomérique, soit extrait d'une matrice élastomérique, par exemple d'un pneumatique, et ayant alors subi une étape de nettoyage durant laquelle on retire du câble toute matrice élastomérique, notamment tout matériau présent à l'intérieur du câble. Pour garantir un état d'origine, l'interface adhésive entre chaque élément filaire métallique et la matrice élastomérique doit être supprimée, par exemple par procédé électro-chimique dans un bain de carbonate de sodium. Les effets associés à l'étape de conformation du procédé de fabrication du pneumatique décrits ci-dessous, notamment l'allongement des câbles, sont annulés par l'extraction de la nappe et du câble qui reprennent, lors de l'extraction, sensiblement leurs caractéristiques d'avant l'étape de conformation.

Le câble selon l'invention comprend une unique couche d'éléments filaires métalliques enroulés en hélice. En d'autres termes, le câble selon l'invention comprend une seule, pas deux, ni plus de deux couches d'éléments filaires métalliques enroulés en hélice. La couche est constituée d'éléments filaires métalliques, c'est-à-dire plusieurs éléments filaires métalliques, pas d'un seul élément filaire métallique. Dans un mode de réalisation du câble, par exemple lorsque le câble est issu de son procédé de fabrication, le câble selon l'invention est constitué de la couche d'éléments filaires métalliques enroulés.

Le câble selon l'invention est à simple hélice. Par définition, un câble à simple hélice est un câble dans lequel l'axe de chaque élément filaire métallique de la couche décrit une unique hélice, contrairement à un câble à double hélice dans lequel l'axe de chaque élément filaire métallique décrit une première hélice autour de l'axe du câble et une deuxième hélice autour d'une hélice décrite par l'axe du câble. En d'autres termes, lorsque le câble s'étend selon une direction sensiblement rectiligne, le câble comprend une unique couche d'éléments filaires métalliques enroulés ensemble en hélice, chaque élément filaire métallique de la couche décrivant une trajectoire en forme d'hélice autour de la direction sensiblement rectiligne de sorte que la distance entre le centre de chaque élément filaire métallique de la couche et l'axe de la direction sensiblement rectiligne soit sensiblement constante et égale pour tous les éléments filaires métalliques de la couche. Au contraire, lorsqu'un câble à double hélice s'étend selon une direction sensiblement rectiligne, la distance entre le centre de chaque élément filaire métallique de la couche et la direction sensiblement rectiligne est différente pour tous les éléments filaires métalliques de la couche.

Le câble selon l'invention est dépourvu d'âme centrale métallique. On parle également de câble de structure 1×N dans laquelle N est le nombre d'éléments filaires métalliques ou bien encore de câble à structure ouverte (« open-cord » en anglais).

La voûte du câble selon l'invention est délimitée par les éléments filaires métalliques et correspond au volume délimité par un cercle théorique, d'une part, radialement intérieur à chaque élément filaire métallique et, d'autre part, tangent à chaque élément filaire métallique.

Par élément filaire, on entend un élément s'étendant longitudinalement selon un axe principal et présentant une section perpendiculaire à l'axe principal dont la plus grande dimension G est relativement faible par rapport à la dimension L selon l'axe principal. Par relativement faible, on entend que L/G est supérieur ou égal à 100, de préférence supérieur ou égal à 1000. Cette définition couvre aussi bien les éléments filaires de section circulaire que les éléments filaires de section non circulaire, par exemple de section polygonale ou oblongue. De façon très préférée, chaque élément filaire métallique présente une section circulaire.

Par métallique, on entend par définition un élément filaire constitué majoritairement (c'est-à-dire pour plus de 50% de sa masse) ou intégralement (pour 100% de sa masse) d'un matériau métallique. Chaque élément filaire métallique est préférentiellement en acier, plus préférentiellement en acier perlitique ou ferrito-perlitique au carbone, appelé couramment par l'homme du métier acier au carbone, ou encore en acier inoxydable (par définition, acier comportant au moins 10,5% de chrome).

L'angle d'hélice $\alpha$ est une grandeur bien connue de l'homme du métier et peut être déterminé par le calcul itératif suivant comprenant 3 itérations et dans lequel l'indice i indique le numéro de l'itération 1, 2 ou 3. Connaissant l'allongement structural As exprimé en %, l'angle d'hélice $\alpha(i)$ est tel que $\alpha(i)=\text{Arcos}\,[\,(100/(100+\text{As})\times\text{Cos}\,[\,\text{Arctan}\,(\,(\pi\times\text{Df})\,/\,(\text{P}\times\text{Cos}(\alpha(i\text{-}1))\times\text{Sin}(\pi/\text{N}))\,)\,]\,]$, formule dans laquelle P est le pas exprimé en millimètres auquel chaque élément filaire métallique est enroulé, N est le nombre d'éléments filaires métalliques de la couche, Df est le diamètre de chaque élément filaire métallique exprimé en millimètres, Arcos, Cos et Arctan et Sin désignant respectivement les fonctions arcosinus, cosinus, arctangente et sinus. Pour la première itération, c'est-à-dire pour le calcul de $\alpha(1)$, on prend $\alpha(0)=0$. A la troisième itération, on obtient $\alpha(3)=\alpha$ avec au moins un chiffre significatif après la virgule quand $\alpha$ est exprimé en degrés.

Le diamètre d'hélice Dh, exprimé en millimètres, est calculé selon la relation $\text{Dh}=\text{P}\times\text{Tan}(\alpha)\,/\,\pi$ dans laquelle P est le pas exprimé en millimètres auquel chaque élément filaire métallique est enroulé, $\alpha$ est l'angle d'hélice de chaque élément filaire métallique déterminé ci-dessus et Tan la fonction tangente. Le diamètre d'hélice Dh correspond au diamètre du cercle théorique passant par les centres des éléments filaires métalliques de la couche dans un plan perpendiculaire à l'axe du câble.

Le diamètre de voûte Dv, exprimé en millimètres, est calculé selon la relation $\text{Dv}=\text{Dh-Df}$ dans laquelle Df est le diamètre de chaque élément filaire métallique et Dh le diamètre d'hélice, tous deux exprimés en millimètres.

Le rayon de courbure Rf, exprimé en millimètres, est calculé selon la relation $Rf=P/(\pi \times Sin(2\alpha))$ dans laquelle P est le pas exprimé en millimètres, $\alpha$ est l'angle d'hélice de chaque élément filaire métallique et Sin la fonction sinus.

On rappelle que le pas auquel chaque élément filaire métallique est enroulé est la longueur parcourue par cet élément filaire, mesurée parallèlement à l'axe du câble dans lequel il se trouve, au bout de laquelle l'élément filaire ayant ce pas effectue un tour complet autour dudit axe du câble.

Les caractéristiques optionnelles décrites ci-dessous pourront être combinées les unes avec les autres dans la mesure où de telles combinaisons sont techniquement compatibles.

Dans un mode de réalisation avantageux, tous les éléments filaires métalliques présentent le même diamètre Df.

Par orientation d'un angle, on entend le sens, horaire ou anti-horaire, dans lequel il faut tourner à partir d'une droite de référence, ici la direction circonférentielle du pneumatique, définissant l'angle pour atteindre l'autre droite définissant l'angle.

Dans des modes de réalisation préférés, $9 \leq Rf / Df \leq 25$. Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $9 \leq Rf/Df \leq 15$.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $1{,}70 \leq Dv/Df \leq 2{,}50$.

Avantageusement, le rayon de courbure d'hélice Rf est tel que $2$ mm $\leq Rf \leq 7$ mm. Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $4$ mm $\leq Rf \leq 6$ mm et de préférence $4$ mm $\leq Rf \leq 5$ mm.

Dans un mode de réalisation d'un câble destiné au renforcement d'un pneumatique pour véhicules hors-la-route, par exemple des engins agricoles ou de génie civil, on a $4$ mm $\leq Rf \leq 7$ mm et de préférence $4{,}5$ mm $\leq Rf \leq 6{,}5$ mm.

Avantageusement, le diamètre d'hélice Dh de chaque élément filaire métallique est tel que $0{,}40$ mm $\leq Dh \leq 1{,}60$ mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $0{,}85$ mm $\leq Dh \leq 1{,}60$ mm et de préférence $0{,}90$ mm $\leq Dh \leq 1{,}6$ mm.

Dans un mode de réalisation d'un câble destiné au renforcement d'un pneumatique pour véhicules hors-la-route, par exemple des engins agricoles ou de génie civil, on a $0{,}95$ mm $\leq Dh \leq 1{,}40$ mm et de préférence $1{,}00$ mm $\leq Dh \leq 1{,}35$ mm.

Avantageusement, Df est tel que $0{,}10$ mm $\leq Df \leq 0{,}50$ mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $0{,}22$ mm $\leq Df \leq 0{,}50$ mm et de préférence $0{,}25$ mm $\leq Df \leq 0{,}45$ mm.

Dans un mode de réalisation d'un câble destiné au renforcement d'un pneumatique pour véhicules hors-la-route, par exemple des engins agricoles ou de génie civil, on a $0{,}32$ mm $\leq Df \leq 0{,}50$ mm et de préférence $0{,}35$ mm $\leq Df \leq 0{,}50$ mm.

Avantageusement, Dv est tel que $Dv \geq 0{,}46$ mm, et plus préférentiellement $0{,}50$ mm $\leq Dv \leq 1{,}20$ mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $0{,}65$ mm $\leq Dv \leq 0{,}80$ mm.

Dans un mode de réalisation d'un câble destiné au renforcement d'un pneumatique pour véhicules hors-la-route, par exemple des engins agricoles ou de génie civil, on a $0{,}55$ mm $\leq Dv \leq 1{,}00$ mm.

Avantageusement, chaque élément filaire métallique est enroulé à un pas P tel que $3$ mm $\leq P \leq 15$ mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $7$ mm $\leq P \leq 15$ mm, préférentiellement $7{,}5$ mm $\leq P \leq 11$ mm.

Dans un mode de réalisation d'un câble destiné au renforcement d'un pneumatique pour véhicules hors-la-route, par exemple des engins agricoles ou de génie civil, on a $9$ mm $\leq P \leq 15$ mm.

Avantageusement, le câble présente un diamètre D tel que $D \leq 2{,}10$ mm.

Le diamètre ou diamètre apparent, noté D, est mesuré au moyen d'un comparateur d'épaisseur dont le diamètre des touches est au moins égal à 1,5 fois le pas P d'enroulage des éléments filaires (on peut citer par exemple le modèle JD50 de la marque KAEFER permettant d'atteindre une précision de 1/100 de millimètre, équipé de touche type a, et ayant une pression de contact proche de 0,6N). Le protocole de mesure consiste en trois répétitions d'une série de trois mesures (effectuées perpendiculairement à l'axe du câble et sous tension nulle) dont la seconde et la troisième de ces mesures sont réalisées selon une direction décalée angulairement de la précédente d'un tiers de tour, par la rotation de la direction de mesure autour de l'axe du câble.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 1,15 mm ≤ D ≤ 1,55 mm.

Dans un mode de réalisation d'un câble destiné au renforcement d'un pneumatique pour véhicules hors-la-route, par exemple des engins agricoles ou de génie civil, on a 1,5 mm ≤ D ≤ 2 mm.

Dans un mode de réalisation, chaque élément filaire métallique comprend un unique monofilament métallique. Ici, chaque élément filaire métallique est avantageusement constitué d'un monofilament métallique. Dans une variante de ce mode de réalisation, le monofilament métallique est directement revêtu d'une couche d'un revêtement métallique comprenant du cuivre, du zinc, de l'étain, du cobalt ou un alliage de ces métaux, par exemple le laiton ou le bronze. Dans cette variante, chaque élément filaire métallique est alors constitué du monofilament métallique, par exemple en acier, formant une âme, directement revêtu de la couche de revêtement métallique.

Dans ce mode de réalisation, chaque monofilament élémentaire métallique est, comme décrit-ci-dessus, de préférence en acier, et présente une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la matrice dans laquelle le câble est destiné à être noyé et un allègement de la matrice ainsi renforcée.

Avantageusement, la couche étant constituée de N éléments filaires métalliques enroulés en hélice, N va de 3 à 18, de préférence de 5 à 12 et plus préférentiellement de 6 à 9.

Avantageusement, le rapport K du pas P sur le diamètre Df de chaque élément filaire métallique, desdits câbles hyperélastiques, P et Df étant exprimés en millimètres, est tel que 19 ≤ K ≤ 44, de préférence 20 ≤ K ≤ 40 et plus préférentiellement 23 ≤ K ≤ 39, P et Df étant exprimés en millimètres. Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 19 ≤ K ≤ 35 et de préférence 23 ≤ K ≤ 30.

Avantageusement, l'angle d'hélice α de chaque élément filaire métallique est tel que 13° ≤ α ≤ 30°, de préférence 17° ≤ α ≤ 26°. Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 18,5° ≤ α ≤ 30° et de préférence 18,5° ≤ α ≤ 26°.

Pour des valeurs trop élevées du rapport K ou pour des valeurs d'angle d'hélice trop faibles, la compressibilité longitudinale du câble est réduite. Pour des valeurs trop faibles du rapport K ou pour des valeurs d'angle d'hélice trop élevées, la rigidité longitudinale du câble et donc sa capacité de renforcement sont réduites.

Avantageusement, le câble présente un allongement structural As tel que As ≥ 1%, de préférence As ≥ 2,5%, plus préférentiellement As ≥ 3%.

Enfin, le jeu radial relatif Jr est représentatif de la distance séparant chaque paire d'éléments filaires métalliques adjacents ramenée à la longueur disponible pour positionner les éléments filaires métalliques sur la couche. Plus précisément, $Jr = N/(\pi^*(D-Df)) \times (Dh \times Sin(\pi/N) - (Df / Cos(\alpha \times \pi/180)))$, α étant l'angle d'hélice, exprimé en degrés, de chaque élément filaire métallique (54) et Dv=Dh-Df. Plus Jr est élevé, plus l'espace séparant deux éléments filaires métalliques adjacents est élevé par rapport au nombre maximal d'éléments filaires métalliques que la couche pourrait accueillir. A l'inverse, plus Jr est petit, plus l'espace séparant deux éléments filaires métalliques adjacents est petit par rapport au nombre maximal d'éléments filaires métalliques que la couche pourrait accueillir. Dans l'intervalle selon l'invention, Jr permet de maximiser le nombre d'éléments filaires métalliques présents sur la couche et donc la capacité de renforcement du câble sans toutefois détériorer la capacité d'accommodation des déformations de compression longitudinale.

Avantageusement, le jeu radial relatif entre deux éléments filaires adjacents, Jr des dits câbles hyperélastiques compris dans les renforts métalliques élastiques de la couche de protection (311) est tel que 0,10 ≤ Jr ≤ 0,6, de préférence 0,30 ≤ Jr ≤ 0,60. Le jeu radial relatif entre deux éléments filaires adjacents permet de régler l'aération du câble et l'équilibre dans ce type d'application entre sa rigidité notamment transverse et le nombre de fils unitaires possiblement en contact avec l'indenteur. Un câble trop peu aéré aura un comportement proche des câbles classiques et n'apportera pas le même niveau de gain en performance. Un câble trop aéré, au-delà d'un jeu relatif de 0,6, se déformera facilement mais n'opposera pas une résistance suffisante aux indenteurs.

Selon le type de pneumatiques conçus, selon le besoin de résistance à la traction pour chaque utilisation spécifique, camionnette, poids-lourd, génie-civil dont les dimensions varient du 16 pouces à 63 pouces, chaque renfort métallique de l'unique couche ou des couches de protection, est constitué d'un unique câble hyperélastique tel que défini précédemment ou est composé de plusieurs desdits câbles, assemblés ensemble, à savoir, est un toron de câbles hyperélastiques. En effet, l'assemblage de plusieurs câbles hyperélastiques garde les propriétés d'écrasement transverse du câble hyperélastique.

Pour les pneumatiques pour véhicule lourd de type génie civil, selon un mode de réalisation préféré des couches de protection, les renforts métalliques élastiques des couches de protection forment, avec la direction circonférentielle, un angle au moins égal à 15° et au plus égal à 35°.

Pour les pneumatiques pour véhicule lourd de type génie civil, un mode de réalisation préférée comprend deux couches de protection comportant des renforts métalliques hyperélastiques. Plus avantageusement les renforts métalliques respectifs des deux couches de protection sont croisés d'une couche de protection à la suivante. Plus avantageusement pour des gains de productivité, les renforts métalliques de la couche de protection la plus radialement intérieure, forment avec la direction circonférentielle (XX'), un angle égal en valeur absolue à l'angle formé par les renforts métalliques de la couche de protection la plus radialement extérieure avec la direction circonférentielle (XX'). Et plus avantageusement, pour avoir un comportement homogène dans la répartition des efforts repris par chacune des couches de l'armature de sommet, la valeur absolue des angles formés par les renforts métalliques hyperélastiques des couches de protection avec la direction circonférentielle, est sensiblement égale à la moyenne des valeurs absolues des angles formés par les renforts métalliques des couches de travail avec la direction circonférentielle (XX').

Selon un mode de réalisation préféré de la couche de protection la plus radialement extérieure, les renforts métalliques hyperélastiques de la couche de protection la plus radialement extérieure forment, avec la direction circonférentielle, un angle égal à celui formé par les renforts métalliques non extensibles de la couche de travail la plus radialement extérieure. Ces angles sont orientés dans le même sens par rapport au plan équatorial du pneumatique, et sont donc égaux en valeur algébrique. En d'autres termes les renforts de ladite couche de protection sont parallèles à ceux de ladite couche de travail.

Selon un mode de réalisation préféré de l'armature de sommet, pour améliorer la performance au martellement, à savoir la fissuration des matériaux caoutchouteux, la couche de protection la plus radialement intérieure a une largeur axiale LP1 au moins égale à 1.05 fois et au plus égale à 1.25 fois la largeur axiale maximale LTmax de la couche de travail ayant la plus grande largeur axiale. En deçà de 1.05 fois la largeur axiale LTmax, la couche de protection la plus radialement intérieure n'est pas suffisamment débordante par rapport à la couche de travail de plus grande largeur axiale pour pouvoir assurer un rôle de protection efficace vis-à-vis du martèlement. Au-delà de 1.25 fois la largeur axiale LTmax, l'extrémité axiale de la couche de protection la plus radialement intérieure est très proche de l'extrémité axiale de la bande de roulement, ce qui augmente le risque de fissuration entre l'extrémité axiale de ladite couche de protection et l'extrémité axiale de la bande de roulement.

Selon un mode de réalisation préféré de l'armature de sommet d'un pneumatique de génie civil, l'armature de sommet comprend une armature de frettage comprenant deux couches de frettage dont les renforts métalliques respectifs, enrobés dans un matériau élastomérique, parallèles entre eux et formant, avec la direction circonférentielle, un angle au plus égal à 10°, sont croisés d'une couche de frettage à la suivante. On distingue usuellement les couches de frettage à angle, avec des renforts formant des angles au moins égaux à 5° et au plus égaux à 8°, et les couches de frettage circonférentiel, avec des renforts sensiblement circonférentiels formant des angles voisins de 0° et au plus égaux à 5°. Les renforts métalliques de couche de frettage peuvent être soit élastiques, soit non extensibles. L'armature de frettage peut être positionnée radialement à l'intérieur de l'armature de travail, entre les deux couches de travail de l'armature de travail, ou radialement à l'extérieur de l'armature de travail.

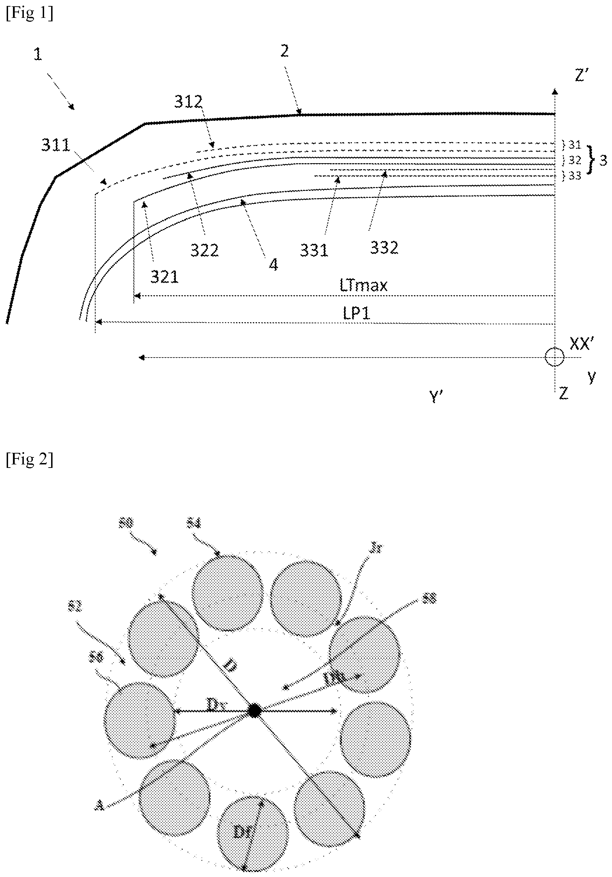

Les caractéristiques de l'invention sont illustrées par les figures 1 et 2 schématiques et non représentées à l'échelle, en référence à un pneumatique de dimension 53/80R63 :

-   figure 1 : coupe méridienne d'un sommet de pneumatique selon l'invention.
-   figure 2 : coupe transverse d'un câble hyperélastique composant toute ou partie des renforts métalliques de l'armature de protection selon l'invention.

Sur la figure 1, est représentée une coupe méridienne d'un pneumatique 1 pour véhicule lourd de type génie civil comprenant une armature de sommet 3, radialement intérieure à une bande de roulement 2 et radialement extérieure à une armature de carcasse 4. L'armature de sommet 3 comprend, radialement de l'extérieur vers l'intérieur, une armature de protection 31, une armature de travail 32 et une armature de frettage 33. L'armature de protection 31 comprend deux couches de protection (311, 312) comprenant des renforts métalliques hyperélastiques enrobés dans un matériau élastomérique, parallèles entre eux et formant un angle égal à 24°, avec une direction circonférentielle XX' tangente à la circonférence du pneumatique, les renforts métalliques respectifs de chaque couche de protection étant croisés d'une couche de protection à la suivante. L'armature de travail 32 comprend deux couches de travail 321, 322 dont les renforts métalliques respectifs non extensibles, enrobés dans un matériau élastomérique, parallèles entre eux et formant, avec la direction circonférentielle XX', des angles respectivement égaux à 33°, pour la couche de travail la plus radialement intérieure 321, et 19°, pour la couche de travail la plus radialement extérieure 322, sont croisés d'une couche de travail à la suivante. La couche de protection la plus radialement intérieure 311 est axialement débordante par rapport à la couche de travail de plus grande largeur axiale, ici la couche de travail la plus radialement intérieure 321. Dans le cas représenté, la largeur axiale LP1 est égale à 1.2 fois la largeur axiale LTmax. L'armature de frettage 33 comprend deux couches de frettage 331, 332 dont les renforts métalliques respectifs, enrobés dans un matériau élastomérique, parallèles entre eux et formant, avec la direction circonférentielle XX', un angle compris entre 5° et 10°, sont croisés d'une couche de frettage à la suivante.

La figure 2 illustre les câbles entrant dans la réalisation des éléments de renfort des couches de protection soit constituant l'éléments de renforts, soit étant un des câbles du toron que constitue l'élément de renfort de la couche de protection. Le câble 50 selon l'invention comprend une unique couche 52 d'éléments filaires métalliques 54 enroulés en hélice. En l'espèce, le câble 50 est constitué de l'unique couche 52, autrement dit le câble 50 ne comprend pas d'autre élément filaire métallique que ceux de la couche 52. La couche 52 est constituée de 9 éléments filaires métalliques enroulés en hélice et étant noyés dans la matrice en composé caoutchouteux de la couche de protection, la voûte interne 58 étant elle-même remplie dudit composé caoutchouteux.

L'invention a été testée sur des pneumatiques de dimension 24.00R35. Les pneumatiques selon l'invention sont comparés à des pneumatiques de référence de même dimension pour chacun des tests.

Concernant la performance de la résistance du sommet à la perforation, deux types de tests sont effectués. Des tests dynamiques ou quasi statiques. Les deux tests utilisent un indenteur dont la géométrie est proche des obstacles causant le plus de rupture de sommet dans les pneumatiques Génie-Civil selon certains utilisateurs. L'indenteur est un prisme à base triangulaire en acier. La hauteur du prisme est de 55 mm. Les tests sont effectués de telle manière que le pneumatique entre en contact avec le prisme sur une de ses arêtes latérales, appelée arête de contact.

Dans le test dynamique, le prisme est fixé à la route par la face latérale opposée à l'arête de contact. L'angle du prisme opposé à la face latérale de fixation à la route est de 45°. Le pneumatique est testé en le montant sur un véhicule, avec la pression et la charge recommandée. Le véhicule est guidé de manière que l'indenteur sollicite le pneumatique sur la même position axiale du sommet. Le pneumatique est réglé en rotation de telle manière que le choc ne se produise par deux fois au même azimut du pneumatique. Le véhicule roule à une vitesse de 5 km/h. Un mécanisme permet d'augmenter la distance de l'arrête de contact au sol de roulage. Le test s'arrête à la perforation du sommet. Le résultat du test est la distance de l'arête au sol de roulage. Plus la hauteur est élevée, mieux le pneumatique résiste au roulage sur des obstacles.

Le test en quasi statique utilise le même type d'indenteur enfoncé à une vitesse de 50 mm/min. Le pneumatique est écrasé sur un sol plan avec une force égale à la charge recommandée, le pneumatique étant gonflé à la pression recommandée. Le polar est enfoncé au centre de l'aire de contact. Le résultat du test est la distance de pénétration nécessaire à la rupture de l'armature de sommet.

Les pneumatiques de référence et selon l'invention sont identiques excepté la ou les couches de protection. Ils ont la même sculpture et les mêmes renforts pour la couche de carcasse et les mêmes composés caoutchouteux pour les différentes parties du pneumatiques. Concernant l'armature de sommet, ils sont constitués de l'élément le plus radialement extérieur vers l'élément le plus radialement intérieur : d'une armature de protection, d'une armature de travail et d'une armature de frettage.

Pour l'ensemble des pneumatiques testés, l'armature de frettage est constituée d'une première couche de frettage formée d'éléments de renfort métalliques inextensibles formant un angle avec la direction circonférentielle, égal à 8° et d'une seconde couche de frettage, radialement extérieure à la première, formée de d'éléments de renfort métalliques inextensibles formant un angle avec la direction circonférentielle égal à 8° et croisés avec les câbles de la couche précédente.

Pour l'ensemble des pneumatiques testés, l'armature de travail est constituée d'une première couche de travail formée de d'éléments de renfort métalliques inextensibles formant un angle avec la direction circonférentielle, égal à 33° orienté du même côté par rapport à la direction circonférentielle que les câbles de la couche de l'armature de frettage la plus radialement intérieure, et d'une seconde couche de travail, radialement extérieure à la première, formée de câbles métalliques inextensibles formant un angle avec la direction circonférentielle égal à 19° et croisés avec les éléments de renfort métalliques de la couche de l'armature de travail la plus radialement intérieure.

Les renforts métalliques inextensibles des armatures de frettage et de sommet sont des câbles 26.30, à savoir des câbles de 26 fils de 30 centièmes de mm de diamètre, disposés en trois couches, la couche centrale comprenant 3 fils, la seconde comprenant 9 fils et la couche extérieure comprenant 14 fils. Lesdits câbles sont disposés à un pas de 3.4mm.

Le pneumatique de référence comprend une armature de protection composée d'une première couche de protection formée d'éléments de renfort métalliques élastiques formant un angle avec la direction circonférentielle, égal à 24°, et d'une seconde couche, radialement extérieure à la première, formée d'éléments de renfort métalliques élastiques formant un angle avec la direction circonférentielle égal à 24° et croisés avec les câbles de la couche précédente. Les angles des différentes couches sont tels que les éléments de renfort de la couche de protection la plus radialement intérieure sont croisés avec les éléments de renfort de la couche de travail la plus radialement extérieure.

Les renforts métalliques élastiques de l'armature de protection du pneumatique de référence sont des torons 24.26, à savoir des torons de 4 câbles 6 fils de 26 centièmes de mm de diamètre. Lesdits torons sont disposés à un pas de 2.5mm.

Le premier pneumatique P1 selon l'invention comprend une armature de protection composée d'une première couche de protection formée d'éléments de renfort métalliques hyperélastiques formant un angle avec la direction circonférentielle, égal à 24°, et d'une seconde couche, radialement extérieure à la première, formée d'éléments de renfort métalliques hyperélastiques formant un angle avec la direction circonférentielle égal à 24° et croisés avec les câbles de la couche précédente. Les angles des différentes couches sont tels que les éléments de renfort de la couche de protection la plus radialement intérieure sont croisés avec les éléments de renfort de la couche de travail la plus radialement extérieure.

Les renforts métalliques hyperélastiques de l'armature de protection du pneumatique P1 selon l'invention sont des câbles 5.45 selon l'invention, à savoir un câble comprenant 5 fils de diamètre Df de 45 centièmes de mm. Lesdits câbles sont disposés à un pas de 2 mm. Le diamètre de voûte Dv des dits fils est égal à 1,11 mm. Le rayon de courbure d'hélice Rf est égal à 4,2 mm. Jr, le jeu radial relatif entre deux éléments filaires adjacents est égal à 0,43.

Le second pneumatique P2 selon l'invention comprend une armature de protection composée d'une unique couche de protection formée d'éléments de renfort métalliques hyperélastiques formant un angle avec la direction circonférentielle, égal à 24°. Les angles des différentes couches sont tels que les éléments de renfort de la couche de protection sont croisés avec les éléments de renfort de la couche de travail la plus radialement extérieure, dans une première version et non croisés dans une version P2'.

Les renforts métalliques hyperélastiques de l'armature de protection du pneumatique P2 selon l'invention, quelles que soient les versions, sont des torons 18.45, à savoir des torons selon l'invention composés de 3 câbles comprenant 6 fils de diamètre Df de 45 centièmes de mm. Lesdits torons sont disposés à un pas de 4,4 mm. Le diamètre de voûte Dv des dits fils est égal à 1.11 mm. Le rayon de courbure d'hélice Rf est égal à 4,2 mm. Jr, le jeu radial relatif entre deux éléments filaires adjacents est égal à 0,35.

Les pneumatiques P1, P2, P2' selon l'invention amènent, quelles que soient les versions, un gain au moins égal à 7% en ce qui concerne le test dynamique et d'au moins 18% selon le test statique comparativement au pneumatique de référence. L'armature de sommet est allégée d'environ 8% pour les versions de pneumatique selon l'invention avec deux couches de protection et de 17% pour les versions de pneumatique selon l'invention avec une seule couche de protection. L'invention telle que proposée permet donc d'améliorer la résistance à la perforation sommet tout en diminuant la masse de l'armature de sommet et donc la masse du pneumatique.

**Revendications**

1. Pneumatique (1) pour véhicule de type poids-lourd, génie civil ou agricole comprenant :

   - une armature de sommet (3), radialement intérieure à une bande de roulement (2) et radialement extérieure à une armature de carcasse (4),
   - l'armature de sommet (3) comprenant, radialement de l'extérieur vers l'intérieur, une armature de protection (31) et une armature de travail (32),
   - l'armature de protection (31) comprenant au moins une couche de protection (311,312) comprenant des renforts métalliques hyperélastiques, enrobés dans un matériau élastomérique, parallèles entre eux et formant, avec une direction circonférentielle (XX') tangente à la circonférence du pneumatique, un angle au moins égal à 10°, chaque renfort métallique hyperélastique comprenant au moins un câble, dit hyperélastique (50) :

   **caractérisé**

   **en ce que** les dits câbles hyperélastiques (50) comprennent une unique couche (52) constituée de N éléments filaires métalliques (54) enroulés en hélice et présentant un diamètre externe D, chaque élément filaire métallique (54) de la couche (52) décrivant, lorsque le câble (50) s'étend selon une direction sensiblement rectiligne, une trajectoire en forme d'hélice autour d'un axe principal (A) sensiblement parallèle à la direction sensiblement rectiligne, de sorte que, dans un plan de coupe sensiblement perpendiculaire à l'axe principal (A), la distance entre le centre de chaque élément filaire métallique (54) de la couche (52) et l'axe principal (A) est égale à la moitié du diamètre d'hélice Dh et est sensiblement constante et égale pour tous les éléments filaires métalliques (54) de la couche (52), les éléments filaires métalliques (54) définissant une voûte interne (58) du câble de diamètre Dv, chaque élément filaire métallique (54) présentant un diamètre Df et un rayon de courbure d'hélice Rf défini par $Rf = P/(\pi \times \mathrm{Sin}(2\alpha))$ avec P le pas de chaque élément filaire métallique exprimé en millimètres et $\alpha$ l'angle d'hélice de chaque élément filaire métallique (54), **caractérisé en ce que**, Dh, D, Dv, Df et Rf étant exprimés en millimètres :

   $$9 \leq Rf / Df \leq 30,$$

   et

$$1,30 \leq Dv / Df \leq 4.5,$$

- le diamètre de voûte Dv étant calculé selon la relation Dv=Dh-Df,
- lesdits câbles hyperélastiques (50) étant noyés dans un composé caoutchouteux.

2. Pneumatique (1) selon la revendication 1, **dans lequel** le rapport K du pas P sur le diamètre Df de chaque élément filaire métallique (54), des dits câbles hyperélastiques (50), est tel que $19 \leq K \leq 44$, de préférence $20 \leq K \leq 40$ et plus préférentiellement $23 \leq K \leq 39$, P et Df étant exprimés en millimètres.

3. Pneumatique (1) selon l'une des revendications 1 ou 2, **dans lequel** il existe un jeu radial relatif, Jr, entre deux éléments filaires adjacents desdits câbles hyperélastiques (50), Jr $=N/(\pi*(D-Df)) \times (Dh \times Sin(\pi/N) - (Df / Cos(\alpha \times \pi/180)))$, $\alpha$ étant l'angle d'hélice, exprimé en degrés, de chaque élément filaire métallique (54) et Dv=Dh-Df, et Jr des renforts métalliques hyperélastiques de la couche de protection (311) étant tel que $0,10 \leq Jr \leq 0,6$.

4. Pneumatique (1) selon l'une quelconque des revendications précédentes, **dans lequel** chaque renfort métallique hyperélastique de ladite couche de protection (311, 312) est un câble hyperélastique (50).

5. Pneumatique (1) selon l'une quelconque des revendications 1 à 3, **dans lequel** chaque renfort métallique hyperélastique de ladite couche de protection (311, 312) est un toron de câbles hyperélastiques (50).

6. Pneumatique (1) pour véhicule lourd de type génie civil selon l'une quelconque des revendications précédentes, **dans lequel** l'armature de protection (31) comprend deux couches de protection (311, 312) dont les renforts métalliques respectifs sont hyperélastiques et croisés d'une couche de protection à la suivante.

7. Pneumatique (1) pour véhicule lourd de type génie civil selon l'une quelconque des revendications précédentes, dont l'armature de protection (31) comprend deux couches de protection (311, 312), dont les renforts métalliques respectifs sont hyperélastiques et croisés d'une couche de protection à la suivante, et dont l'armature de travail (32) comprend au moins deux couches de travail (321, 322), radialement superposées, formées de renforts métalliques non extensibles, **dans lequel** les renforts métalliques de la couche de protection la plus radialement intérieure (311), forment avec la direction circonférentielle (XX'), un angle égal en valeur absolue à l'angle formé par les renforts métalliques de la couche de protection la plus radialement extérieure (312) avec la direction circonférentielle (XX'), la valeur absolue de ces deux angles étant sensiblement égale à la moyenne des valeurs absolues des angles formés par les renforts métalliques des couches de travail (321, 322) avec la direction circonférentielle (XX').

8. Pneumatique (1) pour véhicule lourd de type génie civil selon l'une quelconque des revendications précédentes, dont l'armature de travail (32) comprend au moins deux couches de travail (321, 322), radialement superposées, formées de renforts métalliques non extensibles, **dans lequel** la couche de protection la plus radialement intérieure (311) a une largeur axiale LP1 au moins égale à 1.05 fois et au plus égale à 1.25 fois la largeur axiale maximale LTmax de la couche de travail de la plus grande largeur axiale.

9. Pneumatique (1) pour véhicule lourd de type génie civil selon l'une quelconque des revendications précédentes, **dans lequel** l'armature de sommet (3) comprend une armature de frettage (33) comprenant deux couches de frettage (331, 332) dont les renforts métalliques respectifs, enrobés dans un matériau élastomérique, parallèles entre eux et formant, avec la direction circonférentielle (XX'), un angle au plus égal à 10°.

**Patentansprüche**

1. Reifen (1) für ein Schwerlast-, Baustellen- oder Landwirtschaftsfahrzeug, umfassend:

   - eine Gürtelverstärkung (3), radial innerhalb eines Laufstreifens (2) und radial außerhalb einer Karkassenverstärkung (4),
   - wobei die Gürtelverstärkung (3), radial von außen nach innen, eine Schutzverstärkung (31) und eine Arbeitsverstärkung (32) umfasst,
   - wobei die Schutzverstärkung (31) mindestens eine Schutzlage (311, 312) umfasst, die hyperelastische metallische Festigkeitsträger umfasst, die in ein Elastomermaterial eingebettet sind, parallel zueinander sind und mit einer zum Umfang des Reifens tangentialen Umfangsrichtung (XX') einen Winkel von mindestens 10° bilden, wobei jeder hyperelastische metallische Festigkeitsträger mindestens einen als hyperelastisch bezeichneten Kord (50) umfasst: **dadurch gekennzeichnet, dass** die hyperelastischen Korde (50) eine einzige Lage (52) umfassen, die aus N metallischen fadenförmigen Elementen (54) besteht, die helixförmig gewunden sind und einen Außendurchmesser D aufweisen, wobei jedes metallische fadenförmige Element (54) der Lage (52), wenn sich der Kord (50) entlang einer im Wesentlichen geradlinigen Richtung erstreckt, eine Bahn in Helixform um eine Hauptachse (A) herum beschreibt, die im Wesentlichen parallel zu der im Wesentlichen geradlinigen Richtung ist, so dass in einer zur Hauptachse (A) im Wesentlichen senkrechten Schnittebene der Abstand zwischen dem Mittelpunkt jedes metallischen fadenförmigen Elements (54) der Lage (52) und der Hauptachse (A) gleich der Hälfte des Helixdurchmessers Dh ist und bei allen metallischen fadenförmigen Elementen (54) der Lage (52) im Wesentlichen konstant und gleich ist, wobei die metallischen fadenförmigen Elemente (54) ein inneres Gewölbe (58) des Kords mit dem Durchmesser Dv definieren, wobei jedes metallische fadenförmige Element (54) einen Durchmesser Df und einen Helixkrümmungsradius Rf aufweist, der durch $Rf = P/(\pi \times \mathrm{Sin}\,(2\alpha))$ definiert ist, worin P die in Millimetern ausgedrückte Steigung jedes metallischen fadenförmigen Elements und $\alpha$ der Helixwinkel jedes metallischen fadenförmigen Elements (54) ist, **dadurch gekennzeichnet, dass**, wobei Dh, D, Dv, Df und Rf in Millimetern ausgedrückt werden:

$$9 \leq Rf\ /\ Df \leq 30$$

und

$$1{,}30 \leq Dv\ /\ Df \leq 4.5,$$

- wobei der Gewölbedurchmesser Dv nach der Gleichung Dv=Dh-Df berechnet wird,
- wobei die hyperelastischen Korde (50) in einer Kautschukzusammensetzung versenkt sind.

2. Reifen (1) nach Anspruch 1, bei dem das Verhältnis K der Steigung P zum Durchmesser Df jedes metallischen fadenförmigen Elements (54) der hyperelastischen Korde (50) derart ist, dass $19 \leq K \leq 40$, bevorzugt $20 \leq K \leq 40$ und noch bevorzugter $23 \leq K \leq 39$, wobei P und Df in Millimetern ausgedrückt werden.

3. Reifen (1) nach einem der Ansprüche 1 oder 2, bei dem ein relatives radiales Spiel, Jr, zwischen zwei benachbarten fadenförmigen Elementen der hyperelastischen Korde (50) besteht, $Jr = N/(\pi^{*}(D-Df)) \times (Dh \times \mathrm{Sin}(\pi/N) - (Df\ /\ \mathrm{Cos}(\alpha \times \pi/180)))$, wobei $\alpha$ der in Grad ausgedrückte Helixwinkel jedes metallischen fadenförmigen Elements (54) ist und Dv=Dh-Df und wobei Jr der hyperelastischen metallischen Festigkeitsträger der Schutzlage (311) derart ist, dass $0{,}10 \leq Jr \leq 0{,}6$.

4. Reifen (1) nach einem der vorhergehenden Ansprüche, bei dem jeder hyperelastische metallische Festigkeitsträger der Schutzlage (311, 312) ein hyperelastischer Kord (50) ist.

5. Reifen (1) nach einem der Ansprüche 1 bis 3, bei dem jeder hyperelastische metallische Festigkeitsträger der Schutzlage (311, 312) eine Litze aus hyperelastischen Korden (50) ist.

6. Reifen (1) für ein Baustellenschwerlastfahrzeug nach einem der vorhergehenden Ansprüche, bei dem die Schutzverstärkung (31) zwei Schutzlagen (311, 312) umfasst, deren jeweilige metallische Festigkeitsträger hyperelastisch und von einer Schutzlage zur folgenden überkreuzt sind.

7. Reifen (1) für ein Baustellenschwerlastfahrzeug nach einem der vorhergehenden Ansprüche, dessen Schutzverstärkung (31) zwei Schutzlagen (311, 312) umfasst, deren jeweilige metallische Festigkeitsträger hyperelastisch und von einer Schutzlage zur folgenden überkreuzt sind, und dessen Arbeitsverstärkung (32) mindestens zwei radial übereinander liegende Arbeitslagen (321, 322) umfasst, die aus nicht dehnbaren metallischen Festigkeitsträgern gebildet sind, wobei die metallischen Festigkeitsträger der radial innersten Schutzlage (311) mit der Umfangsrichtung (XX') einen Winkel bilden, der vom absoluten Wert her gleich dem Winkel ist, der von den metallischen Festigkeitsträgern der radial äußersten Schutzlage (312) mit der Umfangsrichtung (XX') gebildet wird, wobei der absolute Wert dieser beiden Winkel im Wesentlichen gleich dem Mittelwert der absoluten Werte der Winkel ist, die von den metallischen Festigkeitsträgern der Arbeitslagen (321, 322) mit der Umfangsrichtung (XX') gebildet werden.

8. Reifen (1) für ein Baustellenschwerlastfahrzeug nach einem der vorhergehenden Ansprüche, dessen Arbeitsverstärkung (32) mindestens zwei radial übereinander liegende Arbeitslagen (321, 322) umfasst, die aus nicht dehnbaren metallischen Festigkeitsträgern gebildet sind, wobei die radial innerste Schutzlage (311) eine axiale Breite LP1 hat, die mindestens gleich dem 1.05-Fachen und höchstens gleich dem 1.25-Fachen der maximalen axialen Breite LTmax der Arbeitslage mit der größten axialen Breite ist.

9. Reifen (1) für ein Baustellenschwerlastfahrzeug nach einem der vorhergehenden Ansprüche, bei dem die Gürtelverstärkung (3) eine Umreifungsverstärkung (33) umfasst, die zwei Umreifungslagen (331, 332) umfasst, deren jeweilige metallische Festigkeitsträger in ein Elastomermaterial eingebettet sind, parallel zueinander sind und mit der Umfangsrichtung (XX') einen Winkel von höchstens 10° bilden.

**Claims**

1. Tyre (1) for a vehicle of the heavy-duty, construction plant or agricultural type, comprising:

   - a crown reinforcement (3), radially on the inside of a tread (2) and radially on the outside of a carcass reinforcement (4),
   - the crown reinforcement (3) comprising, radially from the outside towards the inside, a protective reinforcement (31) and a working reinforcement (32),
   - the protective reinforcement (31) comprising at least one protective layer (311, 312) comprising hyperelastic metal reinforcers, coated in an elastomeric material, parallel to one another and forming, with a circumferential direction (XX') tangential to the circumference of the tyre, an angle at least equal to 10°, each hyperelastic metal reinforcer comprising at least one cord, called hyperelastic cord (50):
   **characterized in that** said hyperelastic cords (50) comprise a single layer (52) consisting of N metal filamentary elements (54) wound in a helix and having an external diameter D, each metal filamentary element (54) of the layer (52) describing, when the cord (50) extends in a substantially rectilinear direction, a trajectory in the form of a helix around a main axis (A) substantially parallel to the substantially rectilinear direction, so that, in a section plane substantially perpendicular to the main axis (A), the distance between the centre of each metal filamentary element (54) of the layer (52) and the main axis (A) is equal to half the helix diameter Dh and is substantially constant and equal for all the metal filamentary elements (54) of the layer (52), the metal filamentary elements (54) defining an internal enclosure (58) of the cord of diameter Dv, each metal filamentary element (54) having a diameter Df and a helix radius of curvature Rf defined by Rf=P/($\pi \times$ Sin(2$\alpha$)) with P the pitch of each metal filamentary element expressed in millimetres and $\alpha$ the helix angle of each metal filamentary element (54), **characterized in that**, with Dh, D, Dv, Df and Rf being expressed in millimetres:

$$9 \leq Rf / Df \leq 30,$$

and

$$1.30 \leq Dv / Df \leq 4.5,$$

   - the enclosure diameter Dv being calculated using the relationship Dv=Dh-Df,

   - said hyperelastic cords (50) being embedded in a rubber compound.

2. Tyre (1) according to Claim 1, in which the ratio K of the pitch P to the diameter Df of each metal filamentary element (54) of said hyperelastic cords (50) is such that $19 \leq K \leq 44$, preferably $20 \leq K \leq 40$ and more preferably $23 \leq K \leq 39$, P and Df being expressed in millimetres.

3. Tyre (1) according to one of Claims 1 or 2, in which there is a relative radial clearance, Jr, between two adjacent filamentary elements of said hyperelastic cords (50), Jr =N/($\pi$*(D-Df)) $\times$ (Dh $\times$ Sin($\pi$/N) - (Df / Cos($\alpha \times \pi$/180))), $\alpha$ being the helix angle, expressed in degrees, of each metal filamentary element (54) and Dv=Dh-Df, and Jr of the hyperelastic metal reinforcers of the protective layer (311) being such that $0.10 \leq Jr \leq 0.6$.

4. Tyre (1) according to any one of the preceding claims, in which each hyperelastic metal reinforcer of said protective layer (311, 312) is a hyperelastic cord (50).

5. Tyre (1) according to any one of Claims 1 to 3, in which each hyperelastic metal reinforcer of said protective layer (311, 312) is a strand of hyperelastic cords (50).

6. Tyre (1) for a heavy vehicle of the construction plant type according to any one of the preceding claims, in which the protective reinforcement (31) comprises two protective layers (311, 312), the respective metal reinforcers of which are hyperelastic and crossed from one protective layer to the next.

7. Tyre (1) for a heavy vehicle of the construction plant type according to any one of the preceding claims, the protective reinforcement (31) of which comprises two protective layers (311, 312), the respective metal reinforcers of which are hyperelastic and crossed from one protective layer to the next, and the working reinforcement (32) of which comprises at least two radially superposed working layers (321, 322) formed of inextensible metal reinforcers, in which the metal reinforcers of the radially innermost protective layer (311) form with the circumferential direction (XX') an angle equal in absolute value to the angle formed by the metal reinforcers of the radially outermost protective layer (312) with the circumferential direction (XX'), the absolute value of these two angles being substantially equal to the average of the absolute values of the angles formed by the metal reinforcers of the working layers (321, 322) with the circumferential direction (XX').

8. Tyre (1) for a heavy vehicle of the construction plant type according to any one of the preceding claims, the working reinforcement (32) of which comprises at least two radially superposed working layers (321, 322) formed of inextensible metal reinforcers, in which the radially innermost protective layer (311) has an axial width LP1 at least equal to 1.05 times and at most equal to 1.25 times the maximum axial width LTmax of the working layer with the greatest axial width.

9. Tyre (1) for a heavy vehicle of the construction plant type according to any one of the preceding claims, in which the crown reinforcement (3) comprises a hoop reinforcement (33) comprising two hooping layers (331, 332), including the respective metal reinforcers, coated in an elastomeric material, parallel to one another and forming, with the circumferential direction (XX'), an angle at most equal to 10°.

[Fig 1]

[Fig 2]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019058053 A
- US 5843583 A
- WO 2005014925 A
- WO 2007090603 A
- EP 1520069 A